# EUROPÄISCHE PATENTSCHRIFT

(11) **EP 1 675 703 B1**
(45) Veröffentlichungstag und Bekanntmachung des Hinweises auf die Patenterteilung: **09.04.2008**
(21) Anmeldenummer: 04765684.8
(22) Anmeldetag: 29.09.2004
(51) Int. Cl.: B23Q 5/04, B23Q 11/10, B23Q 1/00, F16H 57/04, F16H 3/54

(54) **WERKZEUGMASCHINENGETRIEBE**
MACHINE TOOL GEAR MECHANISM
TRANSMISSION D'UNE MACHINE-OUTIL

(30) Priorität: 21.10.2003 DE 10348757; 21.10.2003 DE 10348755; 24.01.2004 DE 102004003685; 24.01.2004 DE 102004003684
(43) Veröffentlichungstag der Anmeldung: 05.07.2006
(73) Patentinhaber: ZF FRIEDRICHSHAFEN Aktiengesellschaft, 88038 Friedrichshafen (DE)
(72) Erfinder: ECKERT, Harald, 88074 Meckenbeuren (DE)
(86) Internationale Anmeldenummer: PCT/EP2004/010884
(87) Internationale Veröffentlichungsnummer: WO 2005/049265

(56) Entgegenhaltungen:
- WO-A-00/63589
- DE-A- 3 447 932
- US-A- 4 997 325

## Beschreibung

Die vorliegende Erfindung betrifft ein Werkzeugmaschinengetriebe, insbesondere ein Spindelgetriebe gemäß dem Oberbegriff des Patentanspruchs 1.

Insbesondere betrifft die Erfindung ein Spindelgetriebe, bei dem die Kraft- bzw. Momentenübertragung von der Abtriebswelle des Getriebes auf die Spindel direkt erfolgt, wobei die Spindel vorzugsweise koaxial zur Abtriebswelle angeordnet ist. Bei derartigen Getrieben ist die Abtriebswelle mit der Spindel direkt verbunden; die verdrehfeste Verbindung zwischen Spindel und Abtriebswelle kann form- oder kraftschlüssig erfolgen. Hierbei entsteht die Notwendigkeit einer Übergabeeinrichtung für Kühlflüssigkeiten, Öle oder Luft zwischen Getriebeabtrieb und Spindel.

Aus der DE 34 47 932 A1 ist ein Vorsatzgetriebe für Werkzeugmaschinen bekannt geworden, bei dem zwischen einem Antriebsschaft und einer Werkzeugaufnahmespindel ein Planetengetriebe vorgesehen ist. Ferner ist eine zentrale Schmiermittel-Zufuhr vorgesehen, bei der eine teleskopisch verschiebbare und abgedichtete Hohlstange in eine zentrale Bohrung eines Spannzangenträgers eingreift. Die Hohlstange ist ihrerseits mit einem Hohlzapfen verschraubt, der in einem Zuführgehäuse für das Kühl-Schmiermittel drehbar und abgedichtet gelagert ist. Im Übrigen erfolgt die Zufuhr des Kühl-Schmiermittels durch die Hohlstange und eine Steckkupplung. Die bekannte Anordnung erfordert durch eine Vielzahl von Teilen einen hohen Bauaufwand. Die Lagerung und Abdichtung der Hohlstange liegt teilweise im Bereich eines Sonnenrads des Planetengetriebes, was im Falle von Leckagen nachteilig ist.

Der vorliegenden Erfindung liegt die Aufgabe zugrunde, eine Einrichtung zur Übergabe von Kühlflüssigkeiten, Öle oder Luft für ein Werkzeugmaschinengetriebe, insbesondere ein Spindelgetriebe der eingangs genannten Art zu schaffen, die sich durch einen reduzierten Bauaufwand bei großer Betriebssicherheit auszeichnet.

Diese Aufgabe wird durch die Merkmale des Patentanspruchs 1 gelöst. Weitere Ausgestaltungen und Vorteile gehen aus den Unteransprüchen hervor.

Im Rahmen der vorliegenden Erfindung ist die Drehdurchführung in der Abtriebswelle gelagert und umfasst zwei Dichtscheiben, welche als Dichtstelle und als Einrichtung zur Aufnahme von Differenzdrehzahlen dienen. Die Dichtscheiben können in Abhängigkeit vom Medium, von den entstehenden Drücken und von den Volumenströmen unterschiedliche Werkstoffe enthalten und/oder unterschiedliche Geometrien aufweisen. Durch die erfindungsgemäße Konzeption wird die Dichtstelle außerhalb des Getriebes verlagert, was in dem Vorteil resultiert, dass Leckagen zugelassen und direkt in einen Tank zurückgeführt werden können.

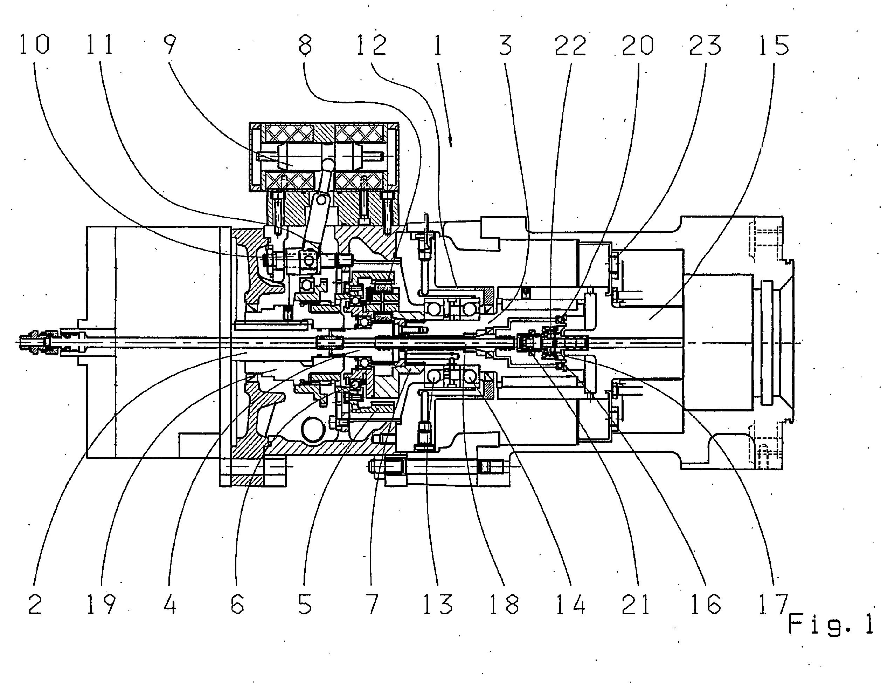

Die Erfindung wird im folgenden anhand der beigefügten Figur, welche eine schematische Schnittansicht einer bevorzugten Ausführungsform eines Getriebes gemäß der vorliegenden Erfindung darstellt, beispielhaft näher erläutert. Planetengetriebe, wie sie üblicherweise bei Werkzeugmaschinengetrieben, insbesondere Spindelgetrieben eingesetzt werden, sind dem Fachmann bekannt, beispielsweise aus der EP 1 169 582 B1 der Anmelderin. Das in der Figur gezeigte Spindelgetriebe umfasst ein Planetengetriebe; es sind auch weitere Getriebearten, wie sie aus dem Stand der Technik bekannt sind, einsetzbar.

Die Figur zeigt ein Spindelgetriebe 1, welches eine Antriebswelle 2, eine Abtriebswelle 3 und ein in Kraftflussrichtung zwischen der Antriebswelle und der Antriebswelle angeordnetes zweistufiges Planetengetriebe umfasst. Das Planetengetriebe weist ein mit der Antriebswelle 2 verbundenes Sonnenrad 4, ein in einer Hohlradlagerung 6 gelagertes Hohlrad 5 und einen Planetenträger 7 mit Planeten 8 auf, der den Abtrieb des Planetengetriebes bildet.

Die Schalteinheit des Getriebes umfasst einen Hubmagneten 9, welcher auf eine mit einer Schaltgabel 10 wirkt, welche auf einer Schaltwelle 11 verschiebbar angeordnet ist. Die Abtriebswelle 3 wird mittels in einem Lagergehäuse 12 angeordneter Lager 13, 14 gelagert und ist mit der Spindel 15 verbunden.

Gemäß der Erfindung ist in das Getriebe 1 eine Drehdurchführung integriert, die als Übergabeeinrichtung für Kühlflüssigkeiten, Öle oder Luft zwischen Getriebeabtrieb 3 und Spindel 15 dient.

Die Drehdurchführung ist in der Abtriebswelle 3 gelagert und umfasst zwei Dichtscheiben 16, 17 welche als Dichtstelle und als Einrichtung zur Aufnahme von Differenzdrehzahlen dienen. Hierbei ist die Dichtscheibe 16 als motorseitige Dichtscheibe und die Dichtscheibe 17 als spindelseitige Dichtscheibe ausgebildet.

Die motorseitige Dichtscheibe 16 ist gemäß der Figur über ein Rohr 18, das Sonnenrad 4 und eine Nabe 19 mit der Motorwelle bzw. Antriebswelle 2 verbunden. Die spindelseitige Dichtscheibe 17 ist direkt in der Spindel 15 oder in einem zusätzlichen Verbindungsteil, beispielsweise in einer Kupplung, angeordnet.

Das Gehäuse der Drehdurchführung ist bevorzugterweise zusätzlich mittels einer Lagerung 20 ein- oder mehrfach gelagert, welche als Kugel-, Wälz-, Gleit- oder Hydrauliklagerung ausgebildet sein kann. Wie der Figur zu entnehmen ist, umfasst die Drehdurchführung ein Rückschlagventil 21, welches ein Leerlaufen des Rohres 18 und der Verbindungsleitungen im drucklosen Zustand verhindert.

Im Rahmen der in der Figur dargestellten Ausführungsform umfasst die Drehdurchführung eine Feder 22, welche die Dichtscheiben 16, 17 zusammendrückt. Im Direktgang liegt an der Dichtstelle keine Differenzdrehzahl vor; jedoch müssen die gleich drehenden Dichtscheiben 16, 17 statisch abdichten.

Da durch die erfindungsgemäße Anordnung der Dichtstelle außerhalb des Getriebes Leckagen zugelassen sind, ist zumindest ein Leckagerückfluss 23 zu einem Tank (nicht dargestellt) vorgesehen.

### Bezugszeichen

- 1.: Getriebe
- 2: Antriebswelle, Motorwelle
- 3: Abtriebswelle
- 4: Sonnenrad
- 5: Hohlrad
- 6: Hohlradlagerung
- 7: Planetenträger
- 8: Planet
- 9: Hubmagnet
- 10: Schaltgabel
- 11: Schaltwelle
- 12: Lagergehäuse
- 13: Lager
- 14: Lager
- 15: Spindel
- 16: Motorseitige Dichtscheibe
- 17: Spindelseitige Dichtscheibe
- 18: Rohr
- 19: Nabe
- 20: Lagerung
- 21: Rückschlagventil
- 22: Feder
- 23: Leckagerückfluss

## Patentansprüche

1. Werkzeugmaschinengetriebe, insbesondere Spindelgetriebe, bei dem die Kraft- bzw. Momentenübertragung von der Abtriebswelle (3) eines zweistufigen Getriebes (1), insbesondere eines Planetengetriebes, auf die Spindel (15) direkt erfolgt, wobei die Spindel (15) koaxial zur Abtriebswelle (3) angeordnet ist, wobei in das Getriebe (1) eine Drehdurchführung integriert ist, die als Übergabeeinrichtung für Kühlflüssigkeiten, Öle oder Luft zwischen Getriebeabtrieb und Spindel (15) dient, **dadurch gekennzeichnet, dass** die Drehdurchführung in der Abtriebswelle (3) des Getriebes (1) gelagert ist und eine motorseitige Dichtscheibe (16) und eine spindelseitige Dichtscheibe (17) umfasst, und dass die motorseitige Dichtscheibe (16) über ein Rohr (18), ein Sonnenrad (4) und eine Nabe (19) mit der Antriebswelle (2) verbunden ist, und dass die spindel-seitige Dichtscheibe (17) direkt in der Spindel (15) oder in einem zusätzlichen Verbindungsteil angeordnet ist.

2. Werkzeugmaschinengetriebe nach Anspruch 1, **dadurch gekennzeichnet, dass** die Drehdurchführung mittels einer Lagerung (20) in einem Gehäuse gelagert ist, wobei die Lagerung (20) als Kugel-, Wälz-, Gleit- oder Hydrauliklagerung ausgebildet ist.

3. Werkzeugmaschinengetriebe nach Anspruch 1, **dadurch gekennzeichnet, dass** die Drehdurchführung ein Rückschlagventil (21) umfasst, welches ein Leerlaufen des Rohres (18) und der Verbindungsleitungen im drucklosen Zustand verhindert.

4. Werkzeugmaschinengetriebe nach Anspruch 3, **dadurch gekennzeichnet, dass** die Drehdurchführung eine Feder (22) aufweist, welche die Dichtscheiben (16, 17) zusammendrückt.

5. Werkzeugmaschinengetriebe nach Anspruch 4, **dadurch gekennzeichnet, dass** die Drehdurchführung eine Einrichtung aufweist, welche die Dichtscheiben (16, 17) auseinander führt, wenn kein Medium fließt.

6. Werkzeugmaschinengetriebe nach Anspruch 5, **dadurch gekennzeichnet, dass** die Einrichtung eine Feder ist.

7. Werkzeugmaschinengetriebe nach Anspruch 1, **dadurch gekennzeichnet, dass** die Drehdurchführung zumindest einen Leckagerückfluss (23) zu einem Tank umfasst.

## Claims

1. Machine tool gearbox, especially a spindle gearbox, on which force or torque is transmitted to the spindle (15) direct by the output shaft (3) of a two-stage gearbox (1), especially a planetary transmission, with the spindle (15) being arranged coaxially to the output shaft (3), with the gearbox (1) incorporating a rotary duct which acts as a means of delivery for coolants, oils or air between gearbox output and spindle (15), **characterized in that** the rotary duct is supported in the output shaft (3) of the gearbox (1) and comprises a motor-mounted sealing washer (16) and a spindle-mounted sealing washer (17), and **in that** the motor-mounted sealing washer (16) is connected to the input shaft (2) by means of a tube (18), a sun gear (4) and a hub, and **in that** the spindle-mounted sealing washer (17) is arranged direct in the spindle (15) or an additional connecting component.

2. Machine tool gearbox according to claim 1, **characterized in that** the rotary duct is supported in a housing by a bearing (20), with this bearing (20) being designed as a ball, a roller, an antifriction, or a hydraulic bearing.

3. Machine tool gearbox according to claim 1, **characterized in that** the rotary tube comprises a check valve (21) which prevents the tube (18) and the connecting lines from running empty when unpressurized.

4. Machine tool gearbox according to claim 3, **characterized in that** the rotary duct features a spring (22) which presses the sealing washers (16, 17) together.

5. Machine tool gearbox according to claim 4, **characterized in that** the rotary duct features a device which separates the sealing washers (16, 17) when there is no flow of medium.

6. Machine tool gearbox according to claim 5, **characterized in that** the device is a spring.

7. Machine tool gearbox according to claim 1, **characterized in that** the rotary duct includes at least one leakage return line (23) to a tank

## Revendications

1. Transmission pour machines-outils, en particulier un réducteur de broche,sur lequel la transmission de force ou du couple s'effectue à partir de l'arbre de sortie (3) d'un réducteur à deux étages (1), en particulier un réducteur planétaire, directement sur la broche (15), sachant que la broche (15) est disposée coaxialement par rapport à l'arbre de sortie (3), sachant que dans e réducteur (1) est intégré un passage tournant, celui-ci servant de dispositif de transfert de liquides de refroidissement, huiles ou air entre la sortie du réducteur et la broche (15), **caractérisée en ce que** le passage tournant est logé dans l'arbre de sortie (3) du réducteur (1) et comprend un disque d'étanchéité côté moteur (16) et un disque d'étanchéité côté broche (17), et **en ce que** le disque d'étanchéité côté moteur (16) est lié par un tube (18), une roue solaire (4) et un moyeu (19) à l'arbre d'entrée (2), et **en ce que** le disque d'étanchéité côté broche (17) est disposé directement dans la broche (15) ou dans un élément de liaison supplémentaire.

2. Transmission pour machines-outils selon la revendication 1, **caractérisée en ce que** le passage tournant est logé à l'aide d'un palier (20) dans un carter, sachant que le palier (20) est réalisé comme roulement à billes, palier à roulement, palier à glissement ou palier hydraulique.

3. Transmission pour machines-outils selon la revendication 1, **caractérisée en ce que** le passage tournant comprend un clapet anti-retour (21), empêchant le fonctionnement à vide du tube (18) et des conduits de raccordement dans l'état sans pression.

4. Transmission pour machines-outils selon la revendication 3, **caractérisée en ce que** le passage tournant comporte un ressort (22), celui-ci comprimant les disques d'étanchéité (16, 17).

5. Transmission pour machines-outils selon la revendication 4, **caractérisée en ce que** le passage tournant comporte un dispositif permettant de séparer les disques d'étanchéité (16, 17), lorsque le liquide ne circule pas dans la transmission.

6. Transmission pour machines-outils selon la revendication 5, **caractérisée en ce que** le dispositif est un ressort

7. Transmission pour machines-outils selon la revendication 1, **caractérisée en ce que** le passage tournant comprend au moins une conduite de retour de fuites (23) dans un réservoir.
